# EUROPÄISCHE PATENTSCHRIFT

(11) **EP 0 574 945 B1**
(45) Veröffentlichungstag und Bekanntmachung des Hinweises auf die Patenterteilung: **03.09.1997**
(21) Anmeldenummer: 93109798.4
(22) Anmeldetag: 18.06.1993
(51) Int. Cl.: F16K 31/02

(54) **Vorrichtung zur Betätigung eines Ventilelementes**
Valve element actuation device
Dispositif d'actionnement pour un élément de soupape

(30) Priorität: 19.06.1992 DE 4220177
(43) Veröffentlichungstag der Anmeldung: 22.12.1993
(73) Patentinhaber: MARCO SYSTEMANALYSE UND ENTWICKLUNG GmbH, D-85221 Dachau (DE)
(72) Erfinder: Reuter, Martin, c/o MARCO Systemanalyse und, D-8060 Dachau (DE)
(74) Vertreter: Schaumburg, Thoenes, Thurn Patentanwälte

(56) Entgegenhaltungen:
- EP-A- 0 143 128
- EP-A- 0 165 407
- DE-A- 3 723 287
- PATENT ABSTRACTS OF JAPAN vol. 12, no. 73 (M-674)(2920) 8. M rz 1988& JP-A-62 215 176 (NOK CORP.) 21. September 1987

## Beschreibung

Die Erfindung betrifft eine Vorrichtung zur Betätigung eines Ventilelementes gemäß dem Oberbegriff des Anspruchs 1.

Üblicherweise werden zur Betätigung von hydraulischen Wegeventilen Elektromagnete verwendet. Dabei sind bei einer Versorgungsspannung von z.B. 12 Volt zum Erzeugen der erforderlichen Anzugskraft von typisch 100 N Spulenströme von einigen hundert Milliampere notwendig.

Beim Einsatz in explosionsgefährdeter Umgebung (z.B. eigensichere Stromkreise im untertägigen Kohlebergbau) ist es jedoch sehr wünschenswert, die zur Ansteuerung erforderliche elektrische Leistung so gering wie möglich zu halten. In der Regel sind an einem Ausbaugestell in einem Kohlestreb je nach Ausführung etwa acht Funktionen zu steuern. Da es eigensichere Netzteile nicht für beliebige Leistungen gibt, muß pro etwa fünf Ausbaugestelle ein Netzteil installiert werden. Dabei ist bereits berücksichtigt, daß nicht alle Ventile gleichzeitig angesteuert werden.

Ideal wäre ein solch niedriger Stromverbrauch, daß auf Netzteile und auf die zu ihnen führenden 220-Volt-Leitungen innerhalb des Strebs ganz verzichtet werden könnte.

Elektromagnetisch betriebene Ventile haben grundsätzlich den Nachteil, daß zur Aufrechterhaltung des aktiven Schaltzustandes ein permanenter Spulenstrom erforderlich ist.

Eine Vorrichtung der eingangs genannten Art ist aus der JP-A-62 215 176 bekannt. Bei dieser Lösung ist der Betätigungshebel zwischen den Spitzen der beiden Translatoren um eine Achse schwenkbar gelagert. Die Translatoren sind bezüglich der Schwenkachse gegeneinander versetzt. Eine thermische Längenänderung der Translatoren führt zu einer Verstellung des Betätigungshebels.

Der Erfindung liegt die Aufgabe zugrunde, eine Vorrichtung der eingangs genannten Art anzugeben, zu deren Betätigung nur eine sehr geringe elektrische Leistung erforderlich ist und bei der nichtelektrische Expansionseffekte an den Translatoren kompensiert werden können.

Diese Aufgabe wird durch die im kennzeichnenden Teil des Anspruchs 1 angegebenen Merkmale gelöst.

Piezo-elektrische Translatoren sind an sich bekannt. Sie bestehen jeweils aus einem Stapel piezo-elektrischer Elemente, die aus einem ferro-elektrischen Keramik-Material hergestellt sind. Die typische Dickenänderung einer Scheibe aus Piezokeramik beträgt zwar nur 1 10⁻³ mm bei einer angelegten Feldstärke von 1000 V/mm (wenn der Expansion keine Einspannkraft entgegenwirkt), jedoch kann eine dem erforderlichen Betätigungsweg entsprechende Ausdehnung des Stapels, das heißt des Translators erreicht werden, indem man eine entsprechende Anzahl von Piezo-Scheiben aufeinanderstapelt.

Beim Anlegen der Steuerspannung an einen piezo-elektrischen Translator braucht nur der Ladestrom für die Kapazität des Stellelementes aufgebracht zu werden. Danach fließt nur noch ein vernachläßigbarer Reststrom. Piezo-elektrische Translatoren zeichnen sich durch Verschleißfreiheit, schnelle Schaltzeiten und hohe Stellkraft zu Beginn des Schaltweges aus. Gerade das letztere Merkmal macht sie besonders geeignet zur Betätigung von Hydraulikventilen, da die benötigte Kraft am Stößel eines Hydraulikventils zu Beginn des Stellweges am größten ist, wärend anschließend die hydraulischen Gegenkräfte schnell abnehmen. Diese Anforderung stimmt mit der Weg/Kraft-Kennlinie von piezo-elektrischen Translatoren überein, wogegen bei einen Antrieb mit einem Elektromagneten bei konstantem Spulenstrom die Hubkraft mit dem Stellweg zunimmt.

Trotz dieser offensichtlichen Vorteile piezo-elektrischer Translatoren wird der Einsatz zur Betätigung von Ventilen erst durch die erfindungsgemäße Lösung praktisch sinnvoll.

Beispielsweise hat ein von der Firma Hoechst-CeramTec hergestellter Translatortyp eine Höhe von 16 mm und erreicht bei einer Spannung von 400 Volt einen Expansionsweg von 20 µm. Eingespannt übt er eine Expansionskraft von 1500 N aus. Aus diesen Daten folgt, daß für den geforderten Stellweg von 200 µm eine Hebelübersetzung von 1 : 10 benötigt wird.

Der thermische Ausdehnungskoeffizient von Piezokeramik ist etwa um den Faktor 2 kleiner als der von Stahl (13· 10⁻⁶). Bei einer Temperaturänderung von 30° bedeutet dies einen Unterschied in der thermischen Längenänderung von mehr als 3 µm pro 16 mm. Dies ist bereits ein beträchtlicher Teil des Gesamthubes von 20 µm, der mit dem Translator erzielt werden kann.

Die erfindungsgemäße Lösung beseitigt nun dieses Problem, in dem zum Verschwenken oder Kippen des Betätigungshebel das gegenläufige Wirken zweier Translatoren ausgenützt wird. Nichtelektrische Expansionseffekte, die beispielsweise auf einer Temperaturänderung beruhen und somit in beiden Stapeln gleichartig auftreten, werden dadurch vollständig kompensiert. Somit kann der volle Hub der Translatoren ausgenutzt werden.

Vorteilhafte Ausführungsformen der Erfindung sind in den Unteransprüchen dargestellt.

Weitere Merkmale und Vorteile der Erfindung ergeben sich aus der folgenden Beschreibung, welche in Verbindung mit den beigefügten Zeichnungen die Erfindung an Hand eines Ausführungsbeispieles erläutert. Es zeigen:
- Fig.1: Ein Funktionsschema einer erfindungsgemäßen Betätigungsvorrichtung in einem durch die Translatorenachsen verlaufenden Schnitt und
- Fig. 2: einen der Fig. 1 entsprechenden schematischen Schnitt durch eine realistische Ausführungsform der erfindungsgemäßen Betätigungsvorrichtung.

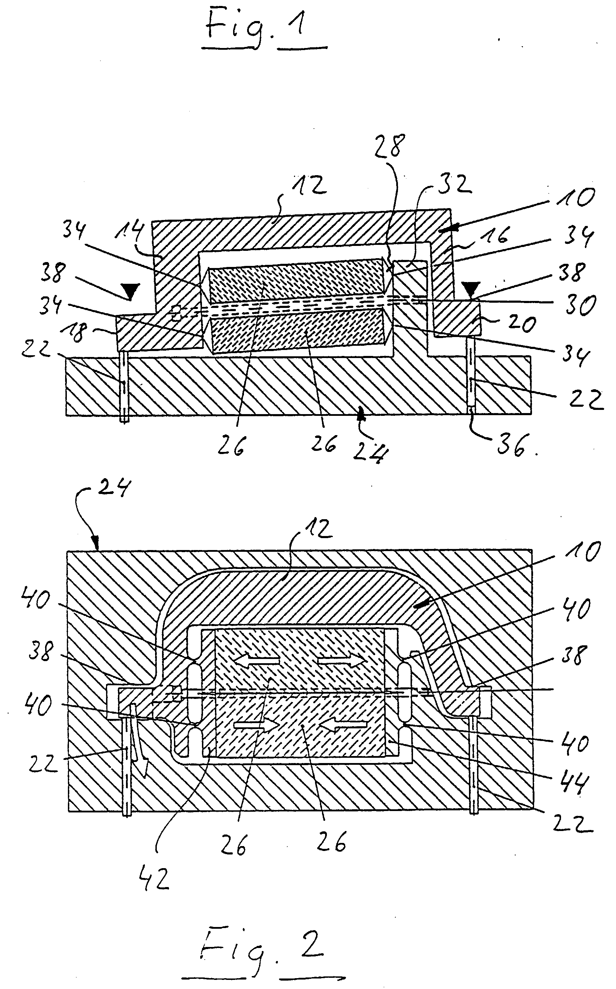

In Fig. 1 ist mit 10 ein Kipp- oder Betätigungshebel bezeichnet, der eine im wesentlichen C-förmige Gestalt hat. Er umfaßt einen Mittel- oder Längsschenkel 12 sowie zwei zu diesem senkrechte Querschenkel 14 und 16.

Diese tragen an ihren freien Enden nach außen gerichtete Betätigungsabschnitte 18 bzw. 20, an denen jeweils ein Betätigungsstößel 22 angeordnet ist.

Der Betätigungshebel 10 ist an einem Grundkörper 24 verschenkbar oder kippbar gelagert. Die Lagerung und das Kippen des Betätigungshebels 10 erfolgt mit Hilfe von zwei piezo-elektrischen Translatoren 26, das heißt Stapeln, die aus einzelnen piezo-elektrischen Elementen aufgebaut sind, die mit ihren Stapelachsen parallel zu einander, mit ihrer Wirkungsrichtung jedoch antiparallel zwischen dem Querschenkel 14 und einer zu diesem im wesentlichen parallelen Spannfläche 28 des Grundkörpers 24 eingespannt sind. Die Spannkraft wird von zwei zwischen den Translatoren 26 verlaufenden Zugschrauben oder Spannbolzen 30 aufgebracht , die einerseit an den Querschenkeln 14 und andererseits an einem die Spannfläche 28 aufweisenden Fortsatz 32 des Grundkörpers 24 angreifen. Die Translatoren 26 sind zwischen dem Querschenkel 14 und der Spannfläche 28 derart eingespannt, daß sie jeweils gegenüber den Spannflächen geringfügig um zur Zeichenebene senkrechte und durch die Spitzen der Dreiecke an den Ecken der Translatoren 26 verlaufende Achsen 34 schwenkbar sind. Die Stößel 22 sind in Bohrungen 36 des Grundkörpers 24 verschiebbar geführt.

Im Ruhezustand wirken den Kräften der beiden Spannschrauben 30 die aus der Kompression der Piezostapel 26 resultierenden eleastischen Kräfte entgegen und halten ihnen das Gleichgewicht. Der Betätigungshebel 10 ist so justiert, daß keine Kippung auftritt. Nicht dargestellte Ventilstößelfedern , die auf die Betätigungsstößel 24 wirken, sorgen dafür, daß der Betätigungshebel 10 auf beiden Seiten an den durch die ausgefüllten Dreiecke 38 angedeuteten Widerlagern anliegt.

Eine gegenläufige Anregung der beiden Translatoren bewirkt eine Verschiebung der Wirkungslinie des von den Stapeln ausgeübten Kräftepaares und damit ein Kippmoment für den Betätigungshebel 10. Die Widerlager 38 sorgen dafür, daß die Kippbewegung sich nur nach unten, das heißt in Richtung der Ventilstößel auswirken kann. Die Vorrichtung wirkt jedoch symmetrisch in beiden Richtungen, so daß durch die Stößel 22 zwei hydraulische Ventilstößel wechselweise betätigt werden können.

Da sowohl die Expansion des einen Translators als auch die Kontraktion des anderen Translators zur Erzeugung der jeweiligen Kippbewegungen herangezogen wird, kann mit vergleichsweise geringem Aufwand der ausreichende Stößelweg und die zum Abheben des Ventilelementes erforderliche Kraft aufgebracht werden.

Bei der in der Fig. 2 dargestellten realistischen Ausführungsform sind gleiche Teile wieder mit gleichen zugszeichen versehen. Die die Gelenkachsen 34 enthaltenden Gelenke sind durch dünne Materialbrücken 40 realisiert, über welche Spannbacken 42, 44 mit dem Querschenkel 14 bzw. dem Grundkörper 24 verbunden sind. Die dargestellte praktische Ausführungsform ist außerordentlich kompakt und praktisch verschleißfrei, da sie keine verschleißanfälligen Gelenkteile hat.

## Patentansprüche

1. Vorrichtung zur Betätigung eines Ventilelementes, umfassend einen Grundkörper (24), einen gegenüber dem Grundkörper (24) schwenkbar gelagerten Betätigungshebel (10) und eine Antriebseinrichtung (26, 26), die am Grundkörper (24) befestigt ist und zwei piezoelektrische Translatoren (26, 26) umfaßt, die an dem Betätigungshebel (10) angreifen, der mit mindestens einem seiner Enden zum Einwirken auf ein Ventilelement bestimmt ist, dadurch **gekennzeichnet**, daß die piezoelektrischen Translatoren (26, 26) mit antiparalleler Wirkungsrichtung zwischen dem Grundkörper (24) und dem Betätigungshebel (10) derart eingespannt sind, daß sie gegenüber dem Grundkörper (24) und dem Betätigungshebel (10) jeweils um eine zur Schwenk- oder Kippachse des Betätigungshebels (10) parallele Achse beweglich sind.

2. Vorrichtung nach Anspruch 1, dadurch **gekennzeichnet**, daß die Translatoren (26) jeweils zwischen einer grundkörperfesten ersten Spannbacke (44) und einer hebelfesten zweiten Spannbacke (42) eingespannt sind, wobei die Spannbacken (42, 44) mit dem jeweiligen Teil (Hebel 10 und Körper 24) über ein Gelenk (34) verbunden sind.

3. Vorrichtung nach Anspruch 2, dadurch **gekennzeichnet**, daß das Gelenk jeweils von einer dünnen Materialbrücke (40) gebildet ist.

4. Vorrichtung nach einem der Ansprüche 1 bis 3, dadurch **gekennzeichnet**, daß die Translatoren (26) an dem Betätigungshebel (10) in einem mittleren Bereich zwischen den Längsenden (18, 20) desselben angreifen und daß jedes Längsende des Betätigungshebels (10) mit einem Ventilbetätigungselements (22) verbunden ist.

5. Vorrichtung nach Anspruch 4, dadurch **gekennzeichnet**, daß der Betätigungshebel (10) und die Antriebseinrichtung (26, 26) in einer Aussparung des Grundkörpers (24) derart angeordnet sind, daß der Betätigungshebel (10) im Bereich seiner Längsenden (18, 20) im Ruhezustand jeweils an einem grundkörperfesten Widerlager (38) anliegt.

6. Vorrichtung nach einem der Ansprüche 1 bis 5, dadurch **gekennzeichnet**, daß der Betätigungshebel (10) C-förmig ausgebildet ist mit einem mittleren Längsschenkel (12) und zwei zu diesem im wesentlichen senkrechten Querschenkeln (14, 16), die an ihren freien Enden jeweils einen parallel zum Längsschenkel (12) nach außen gerichteten Betätigungsabschnitt (18, 20) haben, und daß die beiden Translatoren (26) mit ihrer Wirkrichtung parallel zu dem Längsschenkel (12) gerichtet und zwischen der an einem Querschenkel (14) angeordneten hebelfesten Spannfläche (42) und einer parallel zu dieser nahe dem anderen Querschenkel (16) angeordneten grundkörperfesten Spannfläche (44) eingespannt sind.

7. Vorrichtung nach einem der Ansprüche 1 bis 6, dadurch **gekennzeichnet**, daß die Translatoren (26) mittels zweier zwischen ihnen verlaufenden und die Spannflächen (42, 44) durchsetzenden Spannbolzen (30) eingespannt sind.

## Claims

1. An apparatus for operating a valve element comprising a base (24), an operating lever (10) pivotable relative to the base (24) and a drive device (26, 26) which is secured to the base (24) and has two piezo-electric translators (26, 26) acting on the operating lever (10), said operating lever being adapted to act on a valve element with at least one of its ends, **characterized** in that the piezo-electric translators (26, 26) are constrained with antiparallel directions of action between the base (24) and the operating lever (10) such that they are movable relative to the base (24) and the operating lever (10) about an axis parallel to the pivoting or rocking axis of the operating lever (10).

2. An apparatus according to claim 1, **characterized** in that the translators (26) each are constrained between a first constraining element (44) secured to the base and a second constraining element (42) secured to the lever wherein the constraining elements (42, 44) are connected with the respective elements (lever 10 and base 24) by means of a linkage (34).

3. An apparatus according to claim 2, **characterized** in that each linkage is formed from a thin material bridge (40).

4. An apparatus according to one of claims 1 to 3, **characterized** in that the translators (26) act on the operating lever (10) at a mid region between the longitudinal ends (18, 20) of the same and each longitudinal end of the operating lever (10) is connected with a valve operating element (22).

5. An apparatus according to claim 4, **characterized** in that the operating lever (10) and the drive device (26, 26) are arranged in a recess of the base (24) such that in its rest position, the operating lever (10) contacts an abutment (38) secured to the base in the region of each of its longitudinal ends (18, 20).

6. An apparatus according to one of claims 1 to 5, **characterized** in that the operating lever (10) is formed with a C-shape, with a longitudinal link (12) in its mid-portion and two transverse legs (14, 16) extending substantially perpendicular to the link (12), the transverse legs at each of the free ends having an operating portion (18, 20) projecting outwardly parallel to the longitudinal link (12) and the two translators (26) being oriented with their direction of action parallel to the longitudinal link (12) and constrained between the constraining surface (42) of the lever located on a transverse leg (14) and a parallel constraining surface (44) secured to the base and located close to the other transverse leg (16).

7. An apparatus according to one of claims 1 to 6, **characterized** in that the translators (26) are held by means of two tension bolts (30) extending between them and intersecting the constraining surfaces (42, 44).

## Revendications

1. Dispositif pour l'actionnement d'un élément de soupape, comprenant un corps de base (24), un levier d'actionnement (10) monté oscillant par rapport au corps de base (24), et un dispositif d'entraînement (26, 26) qui est fixé au corps de base (24) et comprend deux translateurs piézo-électriques (26, 26) qui attaquent le levier d'actionnement (10), lequel est destiné à agir sur un élément de soupape par au moins une de ses extrémités, caractérisé en ce que les translateurs piézo-électriques (26, 26) sont serrés entre le corps de base (24) et le levier d'actionnement (10) avec des directions d'action anti-parallèles, de manière à pouvoir se déplacer autour d'un axe parallèle à l'axe d'oscillation ou de basculement du levier d'actionnement (10), par rapport au corps de base (24) et par rapport au levier d'actionnement (10).

2. Dispositif selon la revendication 1, caractérisé en ce que les translateurs (26) sont serrés chacun entre une première mâchoire de serrage (44) solidaire du corps de base et une deuxième mâchoire de serrage (42) solidaire du levier, chacune des mâchoires de serrage (42, 44) étant reliée à l'élément correspondant (levier 10 ou corps 24) par une articulation (34).

3. Dispositif selon la revendication 2, caractérisé en ce que l'articulation est formée par un mince pont de matière (40).

4. Dispositif selon une des revendications 1 à 3, caractérisé en ce que les translateurs (26) attaquent le levier d'actionnement (10) dans une région médiane entre les extrémités longitudinales (18, 20) de ce levier, et en ce que chaque extrémité longitudinale du levier d'actionnement (10) est reliée à un élément d'actionnement de soupape (22).

5. Dispositif selon la revendication 4, caractérisé en ce que le levier d'actionnement (10) et le dispositif d'entraînement (26, 26) sont disposés dans un évidement du corps de base (24) de telle manière qu'à l'état de repos, le levier d'actionnement (10) soit en appui contre une butée (38) solidaire du corps de base et prévue dans la région de chacune de ses extrémités longitudinales (18, 20).

6. Dispositif selon une des revendications 1 à 5, caractérisé en ce que le levier d'actionnement (10) est en forme de C, avec une branche longitudinale médiane (12) et deux branches transversales (14, 16) sensiblement perpendiculaires à cette première branche, dont chacune possède à son extrémité libre un segment d'actionnement (18, 20) parallèle à la branche longitudinale (12) et dirigé vers l'extérieur, et en ce que les deux translateurs (26) sont dirigés parallèlement à la branche longitudinale (12) pour leur direction d'action et sont serrés entre la surface de serrage (42) solidaire du levier, agencée sur une branche transversale, et une surface de serrage (44) solidaire du corps de base, agencée parallèlement à la première surface de serrage et proche de l'autre branche transversale (16).

7. Dispositif selon une des revendications 1 à 6, caractérisé en ce que les translateurs (26) sont serrés au moyen de deux tirants (30) qui passent entre eux et qui traversent les surfaces de serrage (42, 44).
